# EUROPÄISCHE PATENTSCHRIFT

(11) **EP 2 483 148 B1**
(45) Veröffentlichungstag und Bekanntmachung des Hinweises auf die Patenterteilung: **04.06.2014**
(21) Anmeldenummer: 10760675.8
(22) Anmeldetag: 29.09.2010
(51) Int. Cl.: B64C 21/06

(54) **VORRICHTUNG ZUR GRENZSCHICHTABSAUGUNG UND VERBUNDBAUTEIL HIERFÜR**
DEVICE FOR BOUNDARY LAYER SUCTION AND COMPOSITE COMPONENT THEREFOR
DISPOSITIF D'ASPIRATION DE LA COUCHE LIMITE ET ENSEMBLE COMPOSITE

(30) Priorität: 30.09.2009 DE 102009043489; 30.09.2009 US 247024 P
(43) Veröffentlichungstag der Anmeldung: 08.08.2012
(73) Patentinhaber: Airbus Operations GmbH, 21129 Hamburg (DE)
(72) Erfinder: GERBER, Martin, 28357 Bremen (DE)
(74) Vertreter: Maiwald Patentanwalts GmbH
(86) Internationale Anmeldenummer: PCT/EP2010/064503
(87) Internationale Veröffentlichungsnummer: WO 2011/039285

(56) Entgegenhaltungen:
- WO-A1-2005/113336
- WO-A2-03/089295
- DE-C- 936 618

## Beschreibung

Die Erfindung betrifft eine Vorrichtung zur Grenzschichtabsaugung an der Außenhaut eines Flugzeuges, an der eine von Durchbrüchen durchsetzte absaugbare Fläche über mindestens eine Saugleitung mit einer Saugquelle verbunden ist. Weiterhin betrifft die Erfindung auch ein Verbundbauteil zur Bildung einer solchen absaugbaren Fläche sowie ein Verfahren zur Herstellung desselben.

Das Einsatzgebiet der vorliegenden Erfindung erstreckt sich auf den Luftfahrzeugbau, insbesondere in Bezug auf große Verkehrsflugzeuge. Aerodynamische Teile solcher Verkehrsflugzeugen, wie Triebwerksgondeln, Tragflügel oder das Seitenleitwerk können mit einer Vorrichtung zur Grenzschichtabsaugung an der Außenhaut versehen sein, um den reibungsbehafteten Widerstand zu reduzieren. Bei einem Tragflügel beschleunigt die Strömung nach dem Passieren der maximalen Wölbung und wird dann wieder verlangsamt.

Die Grenzschicht verliert dabei kinetische Energie und wird dicker. Am Umschlagpunkt wird aus der laminaren Grenzschicht eine turbulente Strömung. Die Folge ist, dass der Reibungswiderstand zunimmt.

Um in einem möglichst weiten Flugbereich über einem möglichst großen Teil des Tragflügels oder eines anderen aerodynamischen Teils des Luftfahrzeuges eine laminare Strömung aufrechtzuerhalten, muss das Umschlagen der Grenzschicht von laminar zu turbulent verhindert oder weiter stromab verschoben werden. Das im Rahmen der vorliegenden Erfindung interessierende Absaugen von Luft innerhalb der Grenzschicht stellt eine mögliche Methode zur Grenzschichtstabilisierung dar. Beim Absaugen werden in den kritischen Bereichen der Profilfläche kleinste Öffnungen installiert, über welche die angefachte laminare Grenzschicht abgesaugt wird, bei der Grenzschichtinstabilität vorliegt.

Aus der DE 10 2004 024 016 A1 geht eine gattungsgemäße Vorrichtung zur Grenzschichtabsaugung an der Außenhaut eines Verkehrsflugzeuges hervor. Die Vorrichtung besteht im Wesentlichen aus einer absaugbaren Fläche, die hier an zwei Stellen eines Tragflügels angeordnet ist. Die absaugbare Fläche besitzt eine Vielzahl kleiner Öffnungen, welche mit einer gemeinsamen Saugleitung in Verbindung stehen, die andererseits an eine Saugquelle angekoppelt ist.

Aus der DE 1 280 057 geht eine technische Lösung zur Realisierung der mit Durchbrüchen versehenen absaugbaren Fläche für eine Grenzschichtabsaugung hervor. Hierbei ist die absaugbare Fläche an der Außenhaut mit mehreren parallel zueinander beanstandet angeordneten schmalen Saugschlitzen versehen, die im Inneren des zugeordneten aerodynamischen Teils eine Öffnung für Kammern bilden, die in einem ansonsten plattenförmigen Bauelement eingebracht sind. Unterhalb der Schlitze besitzen die Kammern im Bodenbereich jeweils eine Reihe kleiner Öffnungen, die in Richtung der Saugschlitze verlaufen und eine Verbindung zu einem darunter liegenden jeweiligen Leitungskanal herstellen. Die der Anzahl der Saugschlitze entsprechenden Leitungskanäle werden im Inneren des aerodynamischen Bauteils durch ein gebogenes Wellblech ausgebildet. Das gebogene Wellblech verleiht dem aerodynamischen Bauteil im Zusammenwirken mit einem weiteren, darunterliegend und orthogonal hierzu verlaufenden weiteren Wellblech die ausreichende Stabilität. Die so aufgebaute Außenhaut ist an der Struktur befestigt, welche hier aus Rahmenelementen mit T-Querschnitt besteht. Das die Außenhaut bildende plattenartige Bauelement ist mit dem Wellblech verschweißt.

Nachteilhaft bei diesem Stand der Technik erscheint der Herstellungsaufwand der einzelnen Bauelemente und deren Montage. Insbesonders erfordern die Unterdruck führenden Leitungskanäle ein Dichtschweißen der Verbindung zwischen Wellblech und dem die Außenhaut bildenden plattenförmigen Bauteil. Darüber hinaus erscheint die Fertigung der hierin ausgebildeten Saugschlitze mit darunterliegender Kammer durch den im Prinzip sandwichartigen Materialaufbau recht aufwendig. Ferner ist es erforderlich, dass das Wellblech durch Biegen sehr präzise umgeformt ist, um eine ebenmäßige Anlage des plattenförmigen Bauteils zu gewährleisten. Hierbei auftretende Fertigungstoleranzen lassen sich nur sehr begrenzt durch die Schweißnähte überbrücken.

Aus dem Fachbeitrag "Schrauf G.: Status of Laminar Flow Technology, AIAA Fluid Dynamic Conference, Juni 2008" geht darüber hinaus eine Verbundbauweise zur Herstellung einer absaugbaren Fläche für eine Grenzschichtabsaugung hervor, bei der in einem ersten Fertigungsschritt Profilschienen parallel zueinander beabstandet durch Laserschweißen an ein perforiertes Tragblech angebracht werden. Anschließend wird durch Biegen des Tragbleches die Kontur der Außenhaut geformt, wobei die Profilschienen innenliegend angeordnet sind. Dies erfolgt mit Hilfe einer die Endform vorgebenden Biegevorrichtung. Schließlich wird der Innenraum des so umgeformten aerodynamischen Teils zur Ausbildung der Kanalführung für die Saugleitung bearbeitet. Das Trägerblech ist bereits vorperforiert, so dass die so geschaffene absaugbare Fläche nach Anschluss an eine Saugleitung einsatzbereit ist.

Fertigungstechnisch nachteilig wirkt sich hier das recht aufwendige und umfangreiche Laserschweißen der einzelnen Stringer aus. Hieraus resultieren hohe Fertigungszeiten. Je nach aerodynamischer und strömungsmechanischer Anforderung variiert die Saugkammerbreite an der Vorderkante um mehr als das Vierfache, so dass je nach Formgebung des aerodynamischen Teils sehr viele einzelne Saugkammern notwendig sind.

US 2005/0178924 A offenbart ein Verbundbauteil nach dem Oberbegriff des Anspruchs 1.

Es ist daher die Aufgabe der vorliegenden Erfindung, eine Vorrichtung zur Grenzschichtabsaugung mit einem die absaugbare Fläche bildenden Verbundbauteil sowie ein diesbezügliches Herstellungsverfahren zu schaffen, das die effiziente Herstellung einer robusten absaugbaren Fläche mit geringem Aufwand und reproduzierbarer hoher Qualität ermöglicht.

Die Aufgabe wird hinsichtlich einer Vorrichtung zur Grenzschichtabsaugung ausgehend von den Merkmalen des Oberbegriffs von Anspruch 8 in Verbindung mit dessen kennzeichnenden Merkmalen gelöst. Hinsichtlich des Verbundbauteils selbst wird die Aufgabe durch den Anspruch 1 gelöst und der Anspruch 4 gibt ein spezielles Verfahren zur Herstellung des Verbundbauteils an. Die jeweils rückbezogenen abhängigen Ansprüche beinhalten vorteilhafte Weiterbildungen der Erfindung.

Die Erfindung schließt die vorrichtungstechnische Lehre ein, dass die absaugbare Fläche durch mindestens ein plattenförmiges Verbundbauteil gebildet ist, welches aus einem mehrere zur Außenhaut hin offene Saugkanäle darstellenden Strangpressprofil aus Leichtmetall als Grundkörper besteht, auf dem zur Bildung der Außenhaut im Bereich der absaugbaren Fläche ein mikroperforiertes Deckblech aufgebracht ist.

Der Vorteil der erfindungsgemäßen Lösung liegt insbesondere darin, dass sich durch dieses einfach herstellbare Verbundbauteil eine absaugbare Fläche beliebiger Form und Größe erzeugen lässt. Das Verbundbauteil ist dank des stranggepressten Grundkörpers sehr stabil und das Fertigungsverfahren des Strangpressens garantiert eine reproduzierbar hohe Qualität. Ein weiterer Vorteil des Strangpressens ist, dass sich Leichtmetall als Material verwenden lässt, so dass das Verbundbauteil insgesamt recht leichtbauend ausfällt. Ferner entfallen durch Verwendung des Strangpressprofils die ansonsten recht aufwendigen Schweißarbeiten zur Ausbildung der Saugkanäle unterhalb der Außenhaut im Bereich der absaugbaren Fläche, wodurch auch die Fertigungszeit verringert wird.

Vorzugsweise sollten die erfindungsgemäß im Strangpressprofil ausgebildeten Saugkanäle der absaugbaren Fläche beabstandet nebeneinander in Spannweiten-Richtung des aerodynamischen Teils des Luftfahrzeuges verlaufen, was für soganannte "Constant-Chord" Profile gilt. Eine derartige Verlaufsrichtung verleiht dem Verbundbauteil nebst mechanischer Stabilität eine günstige Kanalführung für eine effiziente Grenzschichtabsaugung.

Das aerodynamische Teil, an welchem die absaugbare Fläche angeordnet ist, kann im Falle eines Verkehrsflugzeuges die Triebwerksgondel und/oder die Tragflügel und/oder das Seitenlaufwerk sein. Eine Grenzschichtabsaugung bei diesen aerodynamischen Teilen führt zu einer signifikanten Reduzierung des Reibungswiderstandes des Verkehrsflugzeuges, indem dort die strömungsgünstige Laminarströmung aufrechterhalten wird.

Gemäß einer die Erfindung verbessernden Maßnahmen wird vorgeschlagen, dass zur Abstimmung des Luftmassenstroms eine Blende in die vorzugsweise durch den Innenraum des aerodynamischen Teils gebildeten Saugleitung zwischen der absaugbaren Fläche sowie der Saugquelle eingesetzt ist. Über die Größe der Blendenöffnung kann der auf die absaugbare Fläche wirkende Unterdruck reguliert werden, um eine effiziente Grenzschichtabsaugung mit einfachen technischen Mitteln zu gewährleisten. In der Regel ist es zwar nicht erforderlich, den Drosselquerschnitt zu ändern; es ist jedoch auch denkbar, anstelle einer Blende mittels einer einstellbaren Drossel den Luftmassenstrom abzustimmen.

Der vorzugsweise als Strangpressprofil aus dem Leichtmetall Aluminium oder einer Aluminiumlegierung bestehende Grundkörper ist mit einem mikroperforierten Deckblech aus Titan oder einem Edelstahl versehen, um das Verbundbauteil zu bilden. In Titan, einer Titanlegierung oder Edelstahl lässt sich zum Einen die Mikroperforierung fertigungstechnisch einfach einbringen; zum Anderen sind diese bevorzugten Metalle für die erfindungsgegenständliche Anwendung im Bereich der Außenhaut des Luftfahrzeuges hinreichend korrosionsbeständig.

Nach einem anderen Aspekt der Erfindung wird das mikroperforierte Deckblech per stoffschlüssiger Verbindung fest auf das Strangpressprofil im Bereich der offenen Kanäle vorzugsweise aufgeklebt oder aufgalvanisiert, vorzugsweise durch Impulsstromverfahren.

Zur Herstellung einer solchen festen stoffschlüssigen Verbindung sind die den Kontakt zum Deckblech herstellenden Stringer-Köpfe des Strangpressprofils mechanisch bearbeitet, beispielsweise durch Fräsen, um eine sehr ebene Auflagefläche für das Deckblech zu schaffen. Dies bildet eine günstige Voraussetzung dafür, anschließend die stoffschlüssige Verbindung herzustellen, so dass schließlich ein stabiles plattenförmiges Verbundbauteil entsteht.

Gemäß einer weiteren, die Erfindung verbessernden Maßnahme wird vorgeschlagen, die Mikroperforierung erst nach dem Aufbringen des Deckblechs auf das Strangpressprofil einzubringen, und zwar vorzugsweise durch Laserstrahlbohren. Demnach ist es nicht erforderlich, die Mikroperforierung vor dem stoffschlüssigen Verbinden des Deckblechs mit dem Strangpressprofil zu erzeugen. Bei der vorzugsweise nachherigen Einbringung der Mikroperforierung in das Deckblech brauchen nur diejenigen Flächenbereiche durchbrochen zu werden, hinter denen sich ein offener Saugkanal befindet. Somit können vorteilhafterweise die Flächenbereich, hinter denen sich ein Stringerkopf des Strangpressprofils befindet, ausgenommen werden von der Mikroperforierung, so dass die stoffschlüssige Verbindung durch die Mikroperforierung nicht beeinträchtigt wird. So entstehen vorzugsweise in Spannweitenrichtung verlaufende mikroperforierte Saugkanäle zur lokalen Grenzschichtabsaugung.

Soll der Bereich der Mikroperforierung für einen höheren Absaugeffekt vergrößert werden, so wird gemäß eines anderen vorteilhaften Weiterbildungsaspekts der Erfindung vorgeschlagen, die Stringerköpfe des Strangpressprofils anzufasen, so dass eine größere wirksame Absaugfläche entsteht.

Die durch Aufkleben oder Aufgalvanisieren des Deckblechs auf das mechanisch vorbearbeitete Strangpressprofil hergestellte stoffschlüssige Verbindung erzeugt ein stabiles Verbundbauteil. Im Falle des Aufklebens wird vorgeschlagen, einen Epoxidharzkleber auf die Stringerköpfe des Strangpressprofils aufzutragen und anschließend das Deckblech unter Druck aufzulegen. Nach Aushärten des Klebers besteht eine gleichmäßig feste Klebverbindung, die mit einem Korrosionsschutz zu versehen ist. Sollte die stoffschlüssige Verbindung stattdessen durch Aufgalvanisieren hergestellt werden, so wird vorgeschlagen, das Strangpressprofil im Bereich der offenen Saugkanäle zunächst mit einem elektrisch leitenden Wachs zu verfüllen. Dies kann je nach Abstand der Stringerköpfe auch durch Einlegen eines wachsummantelten festen Kerns erfolgen, um Wachsmaterial einzusparen. Nach Abschluss des Galvanisierens ist durch Wärmeeintrag das Wachs zu entfernen.

### KURZE BESCHREIBUNG DER ZEICHNUNGEN

Weitere, die Erfindung verbessernde Maßnahmen werden nachfolgend gemeinsam mit der Beschreibung bevorzugter Ausführungsbeispiele der Erfindung anhand der Figuren näher dargestellt. Es zeigt:
- Fig. 1: eine Seitenansicht eines Verkehrsflugzeuges mit absaugbaren Flächen zur Grenzschichtabsaugung an der Außenhaut,
- Fig.2: eine perspektivische Darstellung eines Teilstücks aus dem Seitenleitwerk des Verkehrsflugzeugs gemäß Fig.1 im Bereich der absaugbaren Fläche,
- Fig.3: eine Ausschnittsvergrößerung (Detail A) aus Fig.2 im Bereich des Verbundbauteils, und
- Fig.4a-d: eine Abfolge von Fertigungsschritten zur Herstellung des Verbundbauteils.

### DETAILLIERTE BESCHREIBUNG BEISPIELHAFTER AUSFÜHRUNGSFORMEN

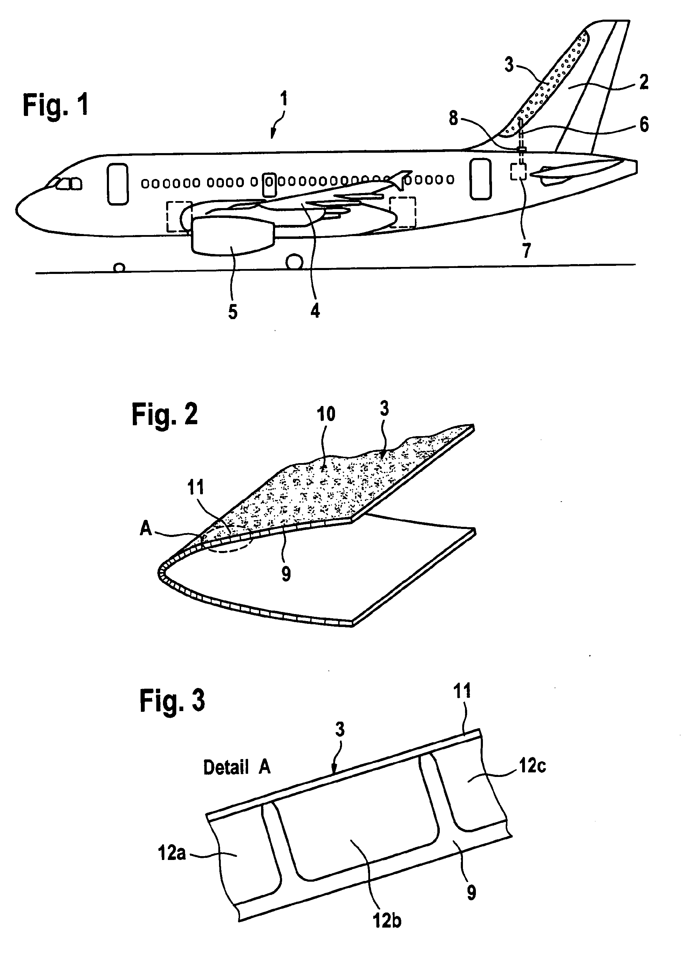

Gemäß Fig.1 befindet sich an einer Außenhaut 1 des hier exemplarisch dargestellten Verkehrsflugzeugs im Bereich des Seitenleitwerks 2 eine absaugbare Fläche 3. Daneben sind auch an anderen aerodynamischen Teilen, hier am Tragflügel 4 sowie an der Triebwerksgondel 5 - nicht weiter dargestellte - ähnliche absaugbare Flächen angeordnet, welche Bestandteil einer Vorrichtung zur Grenzschichtabsaugung sind.

Die absaugbare Fläche 3 des Seitenleitwerks 2 ist über eine hier nur schematisch dargestellte Saugleitung 6 mit einer Saugquelle 7 verbunden, die zum Absaugen der Grenzschicht oberhalb der Fläche 3 den erforderlichen Unterdruck erzeugt. In die Saugleitung 6 der Vorrichtung zur Grenzschichtabsaugung ist zur Abstimmung des Luftmassenstroms eine Blende 8 eingefügt.

Der in Fig.2 dargestellte Ausschnitt aus der absaugbaren Fläche 3 des - nicht weiter im Einzelnen gezeigten - Seitenleitwerks 2 besitzt eine von kleinsten Durchbrüchen 10 von zirka 40 bis 100 Mikrometern durchsetzte Oberfläche, welche durch einen mikroperforiertes Deckblech 11 aus Edelstahl gebildet ist, das gemeinsam mit einem innenseitigen einen Grundkörper bildenden Strangpressprofil 9 aus Aluminium ein Verbundbauteil bildet.

Das in Fig.3 veranschaulichte Detail A des Verbundbauteils zeigt den Querschnitt des Strangpressprofils 9 aus Aluminium, das mehrere zur absaugbaren Fläche in offene Saugkanäle 12a-12c bildet und durch die stabile Querschnittsform dem Verbundbauteil die erforderliche Stabilität verleiht. Zur Bildung der umströmten Außenhaut sind die offenen Saugkanäle 12a-12c des Strangpressprofils 9 mit dem mikroperforierten Deckblech 11 verschlossen, das in diesem Ausführungsbeispiels aufgeklebt ist.

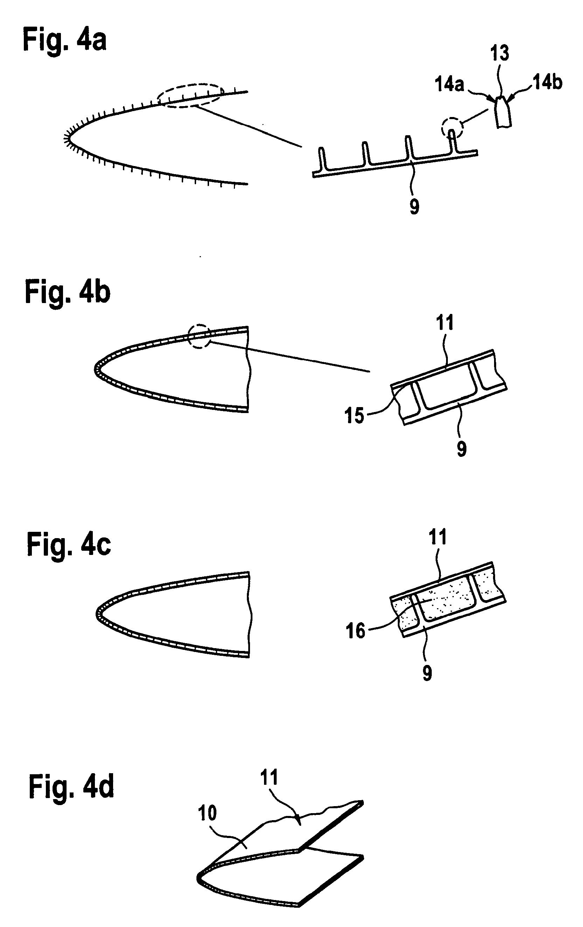

In der Sequenz der Figuren 4a-4d wird ein exemplarisches Verfahren zur Herstellung des vorstehend beschriebenen plattenförmigen Verbundbauteils, welches im Rahmen eines Seitenleitwerks zum Einsatz kommt, veranschaulicht:
Nach Fig.4a erfolgt zunächst eine mechanische Bearbeitung von Stringerköpfen 13 am Strangpressprofil 9 aus Aluminium, um eine ebene Auflagefläche zu erzeugen. Zusätzlich sind die Flanken 14a und 14b des Stringerkopfs 13 durch mechanische Bearbeitung angefast. Die mechanische Bearbeitung erfolgt hier durch Fräsen.

Gemäß Fig.4b wird anschließend das Deckblech 11 auf die ebene Auflagefläche des Strangpressprofils 9 aufgebracht und hiermit fest stoffschlüssig verbunden. Die stoffschlüssige Verbindung wird bei diesem Ausführungsbeispiel über einen Kleberfilm 15 hergestellt. So entsteht ein stabiles plattenförmiges Verbundbauteil.

Gemäß einer in Fig.4c veranschaulichten alternativen stoffschlüssigen Verbindung zwischen Deckblech 11 und Strangpressprofil 9 wird Letzteres zunächst mit elektrisch leitendem Wachs 16 verfüllt, das nach dem Aufgalvanisieren des Deckblechs 11 aus den gebildeten Hohlräumen wieder Herausgeschmolzen wird.

Nach Fig.4d erfolgt im letzten Fertigungsschritt die Einbringung einer Vielzahl von Durchbrüchen 10 in das Deckblech 11 per Mikroperforierung. Die Mikroperforierung des Deckblechs 11 wird durch Laserstrahlbohren erzeugt.

Ergänzend ist darauf hinzuweisen, dass "umfassend" keine anderen Elemente oder Schritte ausschließt und "eine" oder "ein" keine Vielzahl ausschließt.

## Patentansprüche

1. Verbundbauteil mit einer absaugbaren Fläche (3) für eine Grenzschichtabsaugung an der Außenhaut (1) eines Luftfahrzeugs, wobei das Verbundbauteil ein Strangpressprofil (9) aus Leichtmetall als Grundkörper aufweist, dessen Stringer mehrere nebeneinander liegende offene Saugkanäle (12a-12c) bilden, **dadurch gekennzeichnet, dass** zur Bildung der absaugbaren Fläche (3) auf die Stringerköpfe (13) ein mikroperforiertes Deckblech (11) aus Titan oder einem Edelstahl als korrosionsbeständigem Metall aufgebracht ist.

2. Verbundbauteil nach Anspruch 1,**dadurch gekennzeichnet, dass** das mikroperforierte Deckblech (11) auf dem Strangpressprofil (9) zur Herstellung einer festen stoffschlüssigen Verbindung aufgeklebt oder aufvulkanisiert ist.

3. Verbundbauteil nach Anspruch 1,**dadurch gekennzeichnet, dass** das Strangpressprofil (9) aus Aluminium oder einer Aluminiumlegierung besteht.

4. Verfahren zur Herstellung eines Verbundbauteils nach Anspruch 1,**gekennzeichnet durch** die folgenden Fertigungsschritte:
- mechanische Bearbeitung der Stringerköpfe (13) zur Erzeugung von ebenen Auflageflächen für das Deckblech (11),
- Aufbringen des Deckblechs (11) auf die Stringerköpfe (13) mittels einer festen stoffschlüssigen Verbindung zur Erzeugung des plattenförmigen Verbundbauteils.

5. Verfahren nach Anspruch 4,**dadurch gekennzeichnet, dass** die per Mikroperforierung erzeugten vielen Durchbrüche (10) nach dem Aufbringen des Deckblechs (11) auf das Strangpressprofil (9) eingebracht werden.

6. Verfahren nach Anspruch 4 und 5,
**dadurch gekennzeichnet, dass** das Deckblech (11) durch Laserstrahlbohren mikroperforiert wird.

7. Verfahren nach Anspruch 4,
**dadurch gekennzeichnet, dass** die Flanken (14a,14b) des Strangpressprofls (9) beidseits der Stringerköpfe (13) zur Vergrößerung der absaugbaren Fläche (3) durch mechanische Bearbeitung angefast werden.

8. Aerodynamisches Teil eines Luftfahrzeuges mit einem Verbundbauteil nach einem der Ansprüche 1 bis 3,
**dadurch gekennzeichnet, dass** die absaugbare Fläche (3) über die Saugkanäle (12a-12c) und mindestens eine Saugleitung (6) mit einer Saugquelle (7) verbunden ist.

9. Aerodynamisches Teil nach Anspruch 8,
**dadurch gekennzeichnet, dass** die Saugkanäle (12a-12c) in Spannweiten-Richtung verlaufen.

10. Aerodynamisches Teil nach Anspruch 9,
**dadurch gekennzeichnet, dass** das aerodynamische Teil eine Triebwerksgondel (5) oder ein Tragflügel (4) oder ein Seitenleitwerk (2) eines Verkehrsflugzeuges ist.

11. Aerodynamisches Teil nach Anspruch 8,
**dadurch gekennzeichnet, dass** zur Abstimmung des Luftmassenstroms eine Blende (8) in die durch den Innenraum des aerodynamischen Teils gebildeten Saugleitung (6) eingefügt ist.

## Claims

1. A composite component with a surface (3), where suction can take place, for a boundary layer suction on an outer skin (1) of an aircraft,
wherein the composite component comprises an extruded profile (9) made from a light metal as a base body, with a plurality of stringers forming a plurality of open suction channels (12a-12c) arranged next to one another,
**characterized in that**
for forming the surface (3), where suction can take place, a icro-perforated metal cover sheet (11) made of titanium or stainless steel as corrosion-resistant metal is applied to the stringer heads (13).

2. The composite component according to claim 1,
**characterized in that** the icro-perforated metal cover sheet (11) is bonded or vulcanized onto the extruded profile (9) for producing a firm integral connection.

3. The composite component according to claim 1,
**characterized in that** the extruded profile (9) consists of aluminum or an aluminum alloy.

4. A method for the production of a composite component according to claim 1, **characterized by** the following production steps:
- mechanical processing of the stringer heads (13) to produce flat support areas for the metal cover sheet (11).
- applying the metal cover sheet (11) onto the stringer heads (13) by a firm integral connection to produce a composite component in the form of a plate.

5. The method according to claim 4,
**characterized in that** the plurality of openings (10) produced by micro-perforation are produced after application of the metal cover sheet (11) onto the extruded profile (9).

6. The method according to claims 4 and 5,
**characterized in that** the metal cover sheet (11) is micro-perforated by laser beam drilling.

7. The method according to claim 4.
**characterized in that** the flanks (14a, 14b) of the extruded profile (9) are beveled on both sides of the stringer heads (13) by mechanical processing to enlarge the surface (3) where suction can take place.

8. An aerodynamic component for an aircraft with a composite component according to one of claims 1 to 3,
**characterized in that** the surface (3) where suction can take place is connected to a suction source (7) via the suction channels (12a-12c) and at least one suction line (6).

9. The aerodynamic component according to claim 8,
**characterized in that** the suction channels (12a-12c) extend in direction of a wingspan.

10. The aerodynamic component according to claim 9,
**characterized in that** the aerodynamic component is an engine nacelle (5) or a wing (4) or a vertical tail (2) of a commercial aircraft.

11. The aerodynamic component according to claim 8,
**characterized in that** for balancing the air mass flow an aperture (8) is inserted into the suction line (6), which is formed by the interior of the aerodynamic component.

## Revendications

1. Ensemble composite comportant une surface apte à être soumise à une aspiration (3) pour une aspiration de la couche limite sur le revêtement (1) d'un aéronef, l'ensemble composite présentant un profilé extrudé (9) en métal léger en tant que corps de base, dont les raidisseurs forment plusieurs canaux d'aspiration (12a-12c) ouverts juxtaposés, **caractérisé par le fait qu'**une tôle de recouvrement micro-perforée (11) en titane ou en acier inoxydable est appliquée en tant que métal résistant à la corrosion sur les têtes de raidisseur (13) pour la formation de la surface apte à être soumise à une aspiration (3).

2. Ensemble composite selon la revendication 1, **caractérisé par le fait que** la tôle de recouvrement micro-perforée (11) est collée ou vulcanisée sur le profilé extrudé (9) pour l'établissement d'une liaison solidaire de matière.

3. Ensemble composite selon la revendication 1, **caractérisé par le fait que** le profilé extrudé (9) est constitué d'aluminium ou d'un alliage d'aluminium.

4. Procédé de fabrication d'un ensemble composite selon la revendication 1, **caractérisé par** les étapes de fabrication suivantes :
- traitement mécanique des têtes de raidisseur (13) pour la réalisation de surfaces d'appui planes pour la tôle de revêtement (11),
- application de la tôle de revêtement (11) sur les têtes de raidisseur (13) au moyen d'une liaison solidaire de matière pour la réalisation de l'élément composite de type plaque.

5. Procédé selon la revendication 4, **caractérisé par le fait que** les nombreux percements (10) réalisés par microperforation sont apportés après l'application de la tôle de revêtement (11) sur le profilé extrudé (9).

6. Procédé selon la revendication 4 et 5, **caractérisé par le fait que** la tôle de revêtement (11) est microperforée par perçage par faisceau laser.

7. Procédé selon la revendication 4, **caractérisé par le fait que** les flancs (14a, 14b) du profilé extrudé (9) sont biseautés par traitement mécanique sur les deux côtés des têtes de raidisseur (13) pour agrandir la surface apte à être soumise à une aspiration (3).

8. Pièce aérodynamique d'un aéronef avec un ensemble composite selon l'une des revendications 1 à 3, **caractérisée par le fait que** la surface (3) apte à être soumise à une aspiration est raccordée via les canaux d'aspiration (12a-12c) et au moins une conduite d'aspiration (6) à une source d'aspiration (7).

9. Pièce aérodynamique (1) selon la revendication 8, **caractérisée par le fait que** les canaux d'aspiration (12a-12c) s'étendent dans le sens de l'envergure.

10. Pièce aérodynamique (1) selon la revendication 9, **caractérisée par le fait que** la pièce aérodynamique est une nacelle de propulsion (5) ou une aile (4) ou un empennage latéral (2) d'un avion de ligne.

11. Pièce aérodynamique (1) selon la revendication 8, **caractérisée par le fait que**, pour l'ajustage du débit massique d'air, un obturateur (8) est introduit dans la conduite d'aspiration (6) formée par l'intérieur de la pièce aérodynamique.
